(19) Europäisches Patentamt
European Patent Office
Office européen des brevets

(11) EP 1 863 110 B1

(12) # EUROPEAN PATENT SPECIFICATION

(45) Date of publication and mention of the grant of the patent:
**02.03.2011 Bulletin 2011/09**

(21) Application number: **05814459.3**

(22) Date of filing: **12.12.2005**

(51) Int Cl.:
***H01M 8/02*** *(2006.01)* ***C08J 5/22*** *(2006.01)*
***H01M 8/10*** *(2006.01)*

(86) International application number:
**PCT/JP2005/022770**

(87) International publication number:
**WO 2006/064762 (22.06.2006 Gazette 2006/25)**

(54) **ELECTROLYTE FILM WITH EXCELLENT ADHESION TO ELECTRODE**

ELEKTROLYTFILM MIT AUSGEZEICHNETER ADHÄSION DER ELEKTRODE

FILM ÉLECTROLYTIQUE AVEC UNE EXCELLLENTE ADHÉRENCE À L'ÉLECTRODE

(84) Designated Contracting States:
**AT BE BG CH CY CZ DE DK EE ES FI FR GB GR HU IE IS IT LI LT LU LV MC NL PL PT RO SE SI SK TR**

(30) Priority: **15.12.2004 JP 2004362575**

(43) Date of publication of application:
**05.12.2007 Bulletin 2007/49**

(73) Proprietor: **NITTO DENKO CORPORATION**
**Ibaraki-shi,**
**Osaka 567-8680 (JP)**

(72) Inventors:
- **TACHIBANA, Toshimitsu,c/o Nitto Denko Corporation**
**Ibaraki-shi, Osaka 567-8680 (JP)**
- **NAGAI, Yozo,c/o Nitto Denko Corporation**
**Ibaraki-shi, Osaka 5678680 (JP)**
- **NISHIYAMA, Soji,c/o Nitto Denko Corporation**
**Ibaraki-shi, Osaka 567-8680 (JP)**

(74) Representative: **Behnisch, Werner**
**Reinhard, Skuhra, Weise & Partner GbR**
**Patent- und Rechtsanwälte**
**Friedrichstrasse 31**
**80801 München (DE)**

(56) References cited:
**DE-A1- 19 844 645**
**JP-A- 2002 313 365**
**JP-A- 2003 197 218**
**JP-A- 2004 006 306**
**JP-A- 2004 059 752**
**JP-A- 2004 207 082**
**JP-A- 2004 227 865**
**JP-A- 2004 259 576**
**JP-A- 2005 071 654**
**JP-A- 2005 190 702**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 863 110 B1

## Description

TECHNICAL FIELD

The present invention relates to an electrolyte membrane that can maintain its properties even during long-term use in a solid polymer fuel cell. More particularly, the present invention relates to an electrolyte membrane that exhibits excellent adhesion to the electrodes in a solid polymer fuel cell.

BACKGROUND ART

The solid polymer fuel cell has a high energy density and for this reason is expected to be used in a broad range of applications, for example, as a household cogeneration power source, as a power source for mobile devices, as a power source for electric automobiles, as a simple auxiliary power source, and so forth.

The electrolyte membrane in a solid polymer fuel cell functions as an electrolyte for proton conduction and at the same time also functions as a barrier film to prevent the direct mixing of oxygen with hydrogen or methanol fuel. This electrolyte membrane is required, inter alia, to have a high ion-exchange capacity in its role as an electrolyte, to be electrochemically stable during long-term current flow and to have a low electrical resistance, in order to have good mechanical film strength, and to have a low gas permeability for oxygen gas and hydrogen gas or methanol fuel.

The "Nafion" (registered trademark of the DuPont Co.) perfluorosulfonic acid membranes developed by the DuPont Company have been widely used as an electrolyte membrane. However, the prior-art fluoropolymer ion-exchange membranes, beginning with "Nafion", while having an excellent chemical stability, have suffered from a reduced proton conductivity due to a low ion-exchange capacity and due to drying of the ion-exchange membrane caused by an inadequate capacity to hold water. When large numbers of sulfonic acid groups are introduced as a countermeasure here, the film strength is substantially reduced due to water retention and the membrane ends up being easily ruptured, and as a consequence getting proton conductivity to coexist with film strength has been a problem difficult to solve. Moreover, fluoropolymer electrolyte membranes such as Nafion are very expensive due to the complexity of synthesizing the starting fluorinated monomer, and this has been a substantial impediment to the realization of solid polymer electrolyte fuel cells at a practical level.

As a consequence, development has been underway on low-cost, high-performance electrolyte membranes that could replace the fluorine-type electrolyte membranes, including with Nafion. For example, an electrolyte membrane has been proposed that is synthesized by introducing a styrene monomer, through a radiation grafting reaction, into a membrane of ethylene-tetrafluoroethylene copolymer (ETFE) that has a hydrocarbon structure and by then carrying out sulfonation (refer, for example, to Patent Document 1).

However, a problem encountered with the prior-art electrolyte membranes, including the preceding, has been a substantial drop in output accompanying long-term use. This is caused by a decline in the tightness of contact between the electrode and the electrolyte membrane due to long-term use, that is, gaps are produced between the electrode and the electrolyte membrane, resulting in a loss of proton conductivity in such regions.

As an example of technology whose objective is to increase the adhesiveness between the electrolyte membrane and the electrodes, a method has been disclosed in which the area of contact is increased by elaborating elevations and depressions with a size of about 1 to 5 μm in the surface of the electrolyte membrane using a plasma etching treatment (refer, for example, to Patent Document 2). While this method can increase the area of contact with the electrode by the generation of elevations and depressions in the membrane surface, it has been noted that tight contact cannot be maintained during long-term use.

Patent Document 1: Japanese Patent Application Laid-open No. H9-102322
Patent Document 2: Japanese Patent Application Laid-open No. H4-220957

DISCLOSURE OF THE INVENTION

PROBLEMS TO BE SOLVED BY THE INVENTION

The present invention was pursued in order to overcome the problems described above with polymeric ion-exchange membranes, including fluorine-type electrolyte membranes. An object of the present invention is to provide an electrolyte membrane that can maintain its properties even during long-term use in solid polymer fuel cells. A specific object of the present invention is to provide an electrolyte membrane that exhibits excellent adhesion to the electrodes in solid polymer fuel cells.

MEANS FOR SOLVING THE PROBLEM

The present inventors have determined that an inadequate state of adhesion between the electrolyte membrane and an electrode in the stage of production of the electrolyte membrane/electrode combination is a primary cause of decline in cell characteristics (for example, output, durability, and so forth) that accompanies long-term use, i.e., the decline in the tightness of contact between the electrode and electrolyte membrane during long-term use.

In specific terms, within the cell the electrolyte membrane resides in a state in which it retains liquid, for example, water, and the dimensions of the electrolyte membrane undergo variation (swelling and shrinkage) due to changes in the amount of the retained liquid that depends on the operating state of the cell. In addition, in many instances the electrolyte agent is employed as a binder of, for example, as a catalyst, to the electrode material, and this electrolyte agent also undergoes dimensional variation due to softening and because of its function of liquid retention. These dimensional variations can also be caused by temperature variations during starting and stopping. These phenomena occur repeatedly over the course of long-term use, and it was found that, even though the electrode and electrolyte membrane may be adhered to one another initially, delamination at the interface gradually occurs and the cell characteristics decline in association therewith.

Accordingly, the present invention provides an electrolyte membrane that is resistant to deterioration in the initial state of bonding (tightness of contact) with the electrode caused even by changes in the conditions of use and/or in the environment, particularly in connection with its application in solid polymer fuel cells. By specifying the properties (heat distortion temperature and dimensional variation ratio) of the substrate in an electrolyte membrane in which graft chains containing cation-exchange groups have been added to a polymer substrate comprising an olefin-type polymer or a fluoropolymer, the inventors achieved the invention of an electrolyte membrane that can maintain its properties even during long-term operation in a fuel cell.

That is, an electrolyte membrane of the present invention for a solid polymer fuel cell is an electrolyte membrane, in which a graft chain containing a cation-exchange group has been added to a polymer substrate comprising an olefin-type polymer or a fluoropolymer, wherein the penetration temperature of the electrolyte membrane, as measured by thermomechanical analysis, according to the procedure described in JIS K 7196 (1991), is no more than 200°C.

This can provide an electrolyte membrane that exhibits excellent adhesion to the electrodes in a solid polymer fuel cell and that can maintain its properties even during long-term use therein.

The electrolyte membrane of the present invention for a solid polymer fuel cell preferably has a dimensional variation ratio, upon immersion in a 40 weight% aqueous methanol solution, of no more than 40%.

In the electrolyte membrane of the present invention for a solid polymer fuel cell, the polymer substrate preferably comprises polyvinylidene fluoride.

EFFECTS OF THE INVENTION

The present invention provides an electrolyte membrane that can maintain its properties even during long-term use in a solid polymer fuel cell. The present invention also provides an electrolyte membrane that exhibits excellent adhesion to the electrodes in solid polymer fuel cells.

BEST MODE FOR CARRYING OUT THE INVENTION

The electrolyte membrane of the present invention for solid polymer fuel cells can be produced by adding graft chains containing a cation-exchange group to a polymer substrate comprising an olefin-type polymer or a fluoropolymer.

The method used to laminate the electrolyte membrane with the electrode in the case of application in a solid polymer fuel cell can be exemplified by the following:

a method in which an electrolyte polymer solution containing a dispersed catalyst component, for example, platinum supported on carbon, is directly coated, for example, by screen printing, on the surface of the electrolyte membrane, followed by drying by evaporating the solvent component of the electrolyte polymer solution; a method in which an electrolyte polymer solution is temporarily coated on a metal foil or heat-resistant polymer film and is thereafter transferred to the electrolyte membrane.

This electrolyte membrane according to the present invention has a penetration temperature, as measured by thermomechanical analysis, of no more than 200°C. This specification of the penetration temperature makes it possible to improve the adhesion between the electrolyte membrane and electrode component and thereby obtain excellent cell characteristics. That is, by laminating the electrolyte membrane and electrode component using, for example, a method as described above and carrying out press-bonding with the application of pressure while heating to a temperature in the range of approximately 120 to 200°C at which at least the electrolyte membrane component is softened, the electrolyte

membrane can be easily deformed and a dramatic improvement in the adhesion with the electrode component can be brought about. Moreover, the adhesion can be improved still further by selecting, for the electrolyte polymer component in the electrode component, an electrolyte polymer component that also softens or melts in the same temperature range. In addition, the excellent state of adhesion during processing makes possible a more efficient proton transfer and also enables excellent characteristics to be obtained with regard to cell output.

Fluoropolymers and olefin-type polymers are examples of the polymer substrate that can be used in the present invention. Specifically usable as the fluoropolymer are, for example, polyvinylidene fluoride (abbreviated below as PVDF) and tetrafluoroethylene-hexafluoropropylenevinylidene fluoride copolymers. Specifically usable as the olefin-type polymer are, for example, low-density polyethylene, high-density polyethylene, and polypropylene. This polymer substrate is preferably crosslinked in advance, for example, by exposure to radiation, to a degree that enables the penetration temperature requirement to be met; this is preferred because it enables the dimensional variation ratio accompanying liquid retention to be minimized. Fluoropolymers are preferred for the polymer substrate and PVDF is more preferred for the polymer substrate because this provides the interior of the cell with a high robustness with regard to, for example, electrochemical reactions.

The technique of radiation-induced polymerization of a monomer containing the vinyl group or a monomer in which a portion of the vinyl-bonded hydrogen has been replaced with a different functional group (these are referred to hereafter as "vinylic monomer") can be used as the method for adding the graft chain to the polymer substrate. A single vinylic monomer or a mixture of a plurality of vinylic monomers may be used. In specific terms, a vinylic monomer with chemical formula (1) can be used.

$H_2C=CXR_1$ . . .chemical formula (1) When X in this formula is hydrogen,
$R_1$ is $-O-C_nH_{2n+1}$, $-C(=O)-C_nH_{2n+1}$, $-C(=O)-O-C_nH_{2n+1}$, or

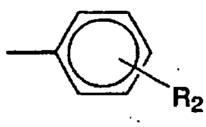

(wherein $R_2$ is -H, $-CH_3$, $-CH_2Cl$, $-CH_2OH$, $-C(CH_3)_3$, $-CH_2SO_3Na$, -Cl, -Br, or -F, and n is 1 to 10); when X is $CH_3$, $R_1$ is $-C_6H_5$.

Among monomers with chemical formula (1), aromatic monomers in which $R_1$ contains the benzene ring are more preferred from the standpoint of facilitating the ensuing sulfonation treatment.

A crosslinking agent whose molecule contains a plurality of graft-reactive unsaturated bonds can also be used as the vinylic monomer, and specific examples here are 1,2-bis(p-vinylphenyl), divinyl sulfone, ethylene glycol divinyl ether, diethylene glycol divinyl ether, triethylene glycol divinyl ether, divinylbenzene, cyclohexanedimethanol divinyl ether, phenylacetylene, diphenylacetylene, 1,4-diphenyl-1,3-butadiene, diallyl ether, 2,4,6-triallyloxy-1,3,5-triazine, triallyl 1,2,4-benzene-tricarboxylate, triallyl-1,3,5-triazin-2,4,6-trione, butadiene, isobutene, and ethylene.

The graft polymerization of the aforementioned monomer on the polymer substrate can be carried out by either of the following methods: the so-called pre-irradiation method, in which reaction with the monomer is carried out after the substrate has been exposed to radiation, or the so-called simultaneous irradiation method, in which the substrate and the monomer are simultaneously exposed to radiation. The use of the pre-irradiation method is preferred because it results in little production of homopolymer not grafted to the substrate.

There are two procedures for carrying out this irradiation. In the radical polymer procedure, irradiation of the polymer substrate is carried out in an inert gas, while in the peroxide procedure irradiation is carried out in an atmosphere that contains oxygen. Either of these procedures can be used. An example of the former irradiation procedure is described as follows. The polymer substrate is first introduced into a glass vessel and this vessel is then vacuum degassed and substituted with an inert gas atmosphere. The vessel containing the substrate is subsequently exposed to 1 to 500 kGy of electron or $\gamma$ radiation at -10 to 80°C and preferably at room temperature. The vessel containing the irradiated substrate is thereafter filled with the monomer freed of oxygen gas by, for example, bubbling with an oxygen-free inert gas and/or freeze/degassing. This monomer can be a single monomer, or a mixed liquid of a plurality of monomers, or a monomer solution prepared by dissolution or dilution with a suitable solvent. In those instances where a pre-crosslinked polymer substrate is used, graft polymerization can be carried out generally at 30 to 150°C and preferably at 40 to 80°C.

The grafting ratio for the polymer substrate after graft polymerization is 6 to 150 weight% and more preferably 10 to 100 weight%. The grafting ratio can be varied through the irradiation dose, polymerization temperature, polymerization time, and so forth.

As the next stage, a cation-exchange group is introduced into the polymer substrate into which the graft chains have been introduced. The cation-exchange group can be introduced into the resulting graft chains after the graft polymerization of the vinylic monomer on the polymer substrate, or the graft chains and cation-exchange group can be

introduced simultaneously into the polymer substrate by the graft polymerization of vinylic monomer that contains a cation-exchange group. In addition, the graft chains may be formed using a vinylic monomer that contains a derivative of a cation-exchange group and this can be followed by conversion to the cation-exchange group. There are no particular limitations on the cation-exchange group, and, for example, a sulfonic group or a carboxyl group can be used.

The cation-exchange group can be introduced into the graft chains using known methods. For example, the conditions for introduction of the sulfonic group are disclosed in Japanese Patent Application Laid-open No. 2001-348439. In specific terms, a grafted film substrate is reacted at room temperature to 80°C for 1 to 48 hours by immersion in a chlorosulfonic acid solution having a concentration of 0.2 to 0.5 mol/L and prepared using 1,2-dichloroethane as the solvent. After reaction for a prescribed period of time, the membrane is thoroughly washed with water. Concentrated sulfuric acid, sulfur trioxide, sodium thiosulfate, and so forth can also be used as the sulfonating agent required by the sulfonation reaction, but the type is not critical as long as it can introduce the sulfonic group. With regard to the carboxyl group and so forth, there are no particular limitations as long as the particular agent can introduce the particular cation-exchange group being pursued.

When a vinylic monomer containing an ion-exchange group is employed, this treatment need not be carried out since the ion-exchange group has been introduced by the time the grafting reaction is completed. In the case of a monomer that contains a derivative of a cation-exchange group, a suitable treatment for conversion into the cation-exchange group is carried out after completion of the grafting reaction. For example, when an ester group-containing a monomer is employed, the carboxyl group, a cation-exchange group, can be obtained by carrying out hydrolysis.

While various types of ion-exchange groups as described above can be used, the introduction of the strongly acidic sulfonic group is more preferred because this provides an excellent proton conductivity.

The electrolyte membrane of the present invention has a penetration temperature, as measured by thermomechanical analysis, of no more than 200°C. In addition, entry by the indenter at 150°C, as measured by thermomechanical analysis at the same time as the preceding, is preferably no more than 50% of the pre-measurement membrane thickness. The reason for this is as follows: when the amount of deformation is overly large during press-bonding of the electrode component with the electrolyte membrane under the application of pressure and heat as described above, a condition is readily achieved in which the strength of the electrolyte membrane itself has been substantially diminished, which can result in a short-circuit condition in which the electrode components disposed on the two sides of the electrolyte membrane come into direct contact.

The electrolyte membrane according to the present invention preferably has a dimensional variation ratio upon immersion in a 40 weight% aqueous methanol solution of no more than 40%. A dimensional variation ratio in excess of 40% impairs the ability to maintain the tight contact with the electrode that is obtained by specifying the softening temperature (penetration temperature) of the electrolyte membrane. This characteristic can be controlled through, for example, the grafting ratio for the electrolyte membrane; the amount of introduction of the ion-exchange group, most prominently the sulfonic group; and the degree of crosslinking (amount of crosslinking agent addition).

The ion-exchange capacity of the polymer electrolyte membrane according to the present invention is preferably 0.3 to 6.0 meq/g and more preferably is 0.5 to 2.0 meq/g. This ion-exchange capacity denotes the ion-exchange capacity (meq/g) per 1 g of the dry electrolyte membrane. An ion-exchange capacity below 0.3 meq/g is inadequate, which leads to a disadvantageously high membrane resistance. At a capacity above 6.0 meq/g, swelling upon liquid incorporation becomes too large, just as with the previously discussed dimensional variation ratio, which impairs the maintenance of tight contact with the electrode.

The polymer electrolyte membrane according to the present invention preferably has an electroconductivity at 25°C of at least 0.03 $\Omega^{-1}cm^{-1}$ and more preferably of at least 0.05 $\Omega^{-1}cm^{-1}$. An electroconductivity less than 0.03 $\Omega^{-1}cm^{-1}$ results in a large membrane resistance and makes it difficult to obtain a satisfactory output.

The thickness of the electrolyte membrane is one of the properties related to membrane resistance. Thinner membranes are preferred for lowering the membrane resistance. However, since an overly thin membrane is susceptible to rupture due to reduced strength and is also susceptible to the generation of membrane defects, such as pin holes, it is useful for the thickness of the electrolyte membrane to be in the range of 5 to 300 $\mu$m and more preferably in the range of 20 to 150 $\mu$m.

The direct methanol fuel cell, which employs methanol as fuel, is one example of a fuel cell. When a Nafion membrane (DuPont), which is a fluorine-type electrolyte membrane, is used in the direct methanol fuel cell, swelling readily occurs due to the absence of crosslinking structures between molecules and the methanol fuel permeates the membrane and diffuses from the anode (fuel electrode) to the cathode (air electrode), creating the quite substantial problem of a reduced power generation efficiency.

The electrolyte membrane of the present invention, however, because it has an improved tightness of contact with the electrode due to the specification of the softening temperature (penetration temperature) and dimensional variation ratio, is very strongly resistant to swelling and can thereby also be effective with regard to inhibiting methanol permeation.

EXAMPLES

Examples of the present invention and comparative examples are provided below, but the invention is not limited to the examples described below.

Example 1

A 50 μm-thick PVDF film that had been fabricated by melt extrusion was introduced into a stopcock-equipped separable glass container (inner diameter = 3 cm, height = 20 cm), which was degassed and then filled with argon gas at 1 atm. While in this state it was exposed at room temperature to a 60 kGy dose of $^{60}Co$ γ radiation at a dose rate of 10 kGy/hr. Then, after having carried out a preliminary evacuation, approximately 100 g of a styrene + toluene liquid mixture (volume ratio = 50/50) was introduced into the container under an argon atmosphere. At this point the film resided in a state of complete immersion in the liquid mixture. After introduction of the liquid mixture, a graft reaction was carried out by heating for 2 hours at 60°C. The film was thoroughly washed with toluene after the reaction and then dried to yield the grafted film.

This graft-polymerized PVDF film was immersed in a 0.3 M solution of chlorosulfonic acid prepared by dilution with 1,2-dichloroethane, followed by heating for 8 hours at 60°C in a sealed state and then washing the film with water and drying to obtain the sulfonated grafted film, that is, an electrolyte membrane.

Example 2

An electrolyte membrane was obtained according to the procedure described in Example 1 above, with the exception that the heating conditions during graft polymerization were 5 hours at 60°C.

Reference Example 3

An electrolyte membrane was obtained according to the procedure described in Example 1 above, with the exception that the heating conditions during graft polymerization were 3 hours at 80°C.

Comparative Example 1

Nafion 112 was used as the electrolyte membrane.

Comparative Example 2

An electrolyte membrane was obtained according to the procedure described in Example 1 above, with the following exceptions: an FEP film (thickness = 50 μm) was used as the polymer substrate and 12 hours at 60°C was used for the heating conditions during graft polymerization.

Comparative Example 3

An electrolyte membrane was obtained according to the procedure described in Example 1 above, with the exception that the heating conditions during graft polymerization were 12 hours at 80°C.

Property evaluation methods

(1) The grafting ratio (G)

The grafting ratio was calculated using the following formula.

$$G = (W2-W1) \times 100/W1$$

W1: weight (g) of the polymer substrate prior to grafting W2: weight (g) of the polymer substrate after grafting (2) The ion-exchange capacity ($I_{ex}$)

The ion-exchange capacity $I_{ex}$ of the electrolyte membrane is described by the following equation.

$$I_{ex} = n(\text{acid group})_{obs}/Wd$$

n(acid group)$_{obs}$: molar amount (mM) of acid groups in the electrolyte membrane
Wd: dry weight (g) of the electrolyte membrane
The n(acid group)$_{obs}$ was measured by the following procedure. Complete conversion into acid form was first carried out by immersing the electrolyte membrane for 4 hours at 50°C in a 1 M (1 mol concentration) sulfuric acid solution. The membrane was then washed with ion-exchanged water and was thereafter immersed for 4 hours at 50°C in a 3 M aqueous NaCl solution for conversion into the -$SO_3$Na form. The molar amount of the acid groups was determined by titrating the displaced protons ($H^+$) with aqueous NaOH solution.

(3) Dimensional variation ratio (S)

The electrolyte membrane was cut to 50 mm x 50 mm. The area after this sample had been thoroughly dried by holding in a drier was designated as Sl. The area after this sample had been subjected to a thorough incorporation of water by immersion for at least 24 hours in pure water was designated as S2. The dimensional variation ratio S was calculated based on these values using the following equation.
$$S = (S2-S1) \times 100/S1$$

(4) The electroconductivity (κ)

To obtain the electroconductivity of the electrolyte membrane, the membrane resistance (Rm) was measured by the alternating current method (New Experimental Chemistry Lectures 19, Polymer Chemistry <II>, p. 992, Maruzen) using a standard membrane resistance measurement cell and an LCR meter (E-4925A, Hewlett-Packard). The cell was filled with 1 M aqueous sulfuric acid solution and the resistance was measured between platinum electrodes (5 mm gap) with and without the membrane. The electroconductivity (specific conductance) of the membrane was calculated using the following formula.
$$\kappa = 1/Rm \cdot d/S \ (\Omega^{-1}cm^{-1})$$

(5) The penetration temperature (T)

This measurement of T was carried out using a thermomechanical analyzer (TMA) under the conditions described below according to the procedure described in JIS K 7196 (1991). The deformation ratio (P) for the membrane thickness was calculated according to the amount of deformation at 200°C in the same measurement and the initial thickness.
measurement instrument: TMA/SS6000 from SSI Nanotechnology
measurement mode: penetration procedure
measurement temperature range: 20 to 250°C
rate of temperature rise: 5°C/min
probe diameter: 1 mm ∅
measurement load: 49 mN
initial thickness: measured using a micrometer (smallest scale = 0.001 mm)

(6) Adhesiveness

Adhesion tests were carried out by fabricating electrode-containing laminates using the electrolyte membranes obtained in the examples and comparative examples.

5 g platinum-on-carbon was first dispersed in 100 mL solution of Nafion (5 weight%) dissolved in isopropanol. This dispersion was coated on one surface of the electrolyte membrane by screen printing followed by drying for 20 minutes at 100°C. The dispersion was also coated on the other surface of the electrolyte membrane by the same procedure, whereupon drying yielded an electrode component formed on both surfaces of the electrolyte membrane.

This was then held for 2 minutes at 140°C under a pressure of 100 kg/cm$^2$ to fabricate an electrolyte membraneelectrode assembly (MEA).

This assembly was immersed in a water-methanol mixed solution (40 weight% aqueous methanol solution) and the electrolyte membrane was brought into a swollen state by heating for 30 minutes at 60°C while being sealed. The assembly was then removed, dried by forced convection drying for 30 minutes in a 60°C ambient, and then allowed to return in a room-temperature ambient. This was designated as 1 cycle, and testing was carried out for a total of 10 cycles. The following conditions were examined: the number of cycles until complete delamination between electrode and electrolyte membrane, and the state of adhesion upon completion of the 10 cycles.

Evaluation results

The results are shown in the table below.

Table 1.

| Results of evaluation of the electrolyte membranes | | | | | | | |
|---|---|---|---|---|---|---|---|
| | G (%) | $I_{ex}$ (meq/g) | S (%) | K ($\Omega^{-1}$ cm$^{-1}$) | T (°C) | P (%) | adhesive-ness* |
| Example 1 | 20 | 1.3 | 27 | 0.09 | 190 | 15 | A |
| Example 2 | 27 | 1.6 | 34 | 0.11 | 185 | 17 | A |
| Reference Example 3 | 33 | 1.9 | 42 | 0.14 | 182 | 18 | B |
| Comp. Example 1 | - | 0.9 | 51 | 0.07 | 219 | 11 | 1 |
| Comp. Example 2 | 23 | 1.4 | 25 | 0.09 | 276 | 6 | 1 |
| Comp. Example 3 | 40 | 2.1 | 47 | 0.16 | 180 | 20 | 7 |

*Adhesiveness:
A almost no delamination
B adhered, but delaminated at the edges
numerical value the number of cycles giving complete delamination

As shown above, adhesion was almost completely maintained even after the adhesion test in Examples 1 to 3, while in contrast to the complete delamination which occurred between the electrode and the electrolyte membrane during testing in all of the comparative examples. These results confirmed the effectiveness of the present invention.

## Claims

1. An electrolyte membrane for a solid polymer fuel cell, in which a graft chain containing a cation-exchange group has been added to a polymer substrate comprising an olefin-type polymer or a fluoropolymer, wherein the electrolyte membrane has a penetration temperature, as measured by thermomechanical analysis according to the procedure described in JIS K 7196 (1991), of no more than 200°C; and a dimensional variation ratio, upon immersion in a 40 weight% aqueous methanol solution, of no more than 40%.

2. The electrolyte membrane according to claim 1, wherein the polymer substrate comprises polyvinylidene fluoride.

## Patentansprüche

1. Elektrolytmembran für eine Feststoffpolymer-Brennstoffzelle, in welcher eine anpolymerisierte Kette, enthaltend eine Kationen-Austauschgruppe, an ein Polymersubstrat hinzugefügt wurde, umfassend ein Polymer vom Olefin-Typ oder ein Fluoropolymer, wobei die Elektrolytmembran eine Penetrationstemperatur aufweist, gemessen durch

thermomechanische Analyse gemäß dem Verfahren JIS K 7196 (1991), von nicht mehr als 200°C; und ein Dimensionsveränderungsverhältnis beim Eintauchen in eine 40 %-ige wässrige Methanollösung von nicht über 40 %.

**2.** Elektrolytmembran nach Anspruch 1, wobei das Polymersubstrat Polyvinylidenfluorid umfasst.

**Revendications**

**1.** Membrane électrolytique pour une pile à combustible à polymère solide, dans laquelle une chaîne greffée contenant un groupe d'échange de cation a été ajoutée à un substrat de polymère comprenant un polymère de type oléfine ou un fluoropolymère, dans laquelle la membrane électrolytique a une température de pénétration, telle que mesurée par analyse thermomécanique selon la procédure décrite dans JIS K 7196 (1991), non supérieure à 200°C; et un rapport de variation dimensionnelle, lors d'une immersion dans une solution aqueuse de méthanol à 40 % en poids, non supérieur à 40 %.

**2.** Membrane électrolytique selon la revendication 1, dans laquelle le substrat de polymère comprend du polyfluorure de vinylidène.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP H9102322 A
- JP H4220957 A
- JP 2001348439 A